# EUROPÄISCHE PATENTSCHRIFT

(11) **EP 2 785 236 B1**
(45) Veröffentlichungstag und Bekanntmachung des Hinweises auf die Patenterteilung: **18.11.2015**
(21) Anmeldenummer: 12787458.4
(22) Anmeldetag: 20.11.2012
(51) Int. Cl.: A47L 15/42, D06F 39/10, B01D 29/01, B01D 29/70, C02F 1/00

(54) **FILTER UND WASSERFÜHRENDES HAUSHALTSGERÄT**
FILTER AND WATER-BEARING DOMESTIC APPLIANCE
FILTRE ET APPAREIL ÉLECTROMÉNAGER À CIRCULATION D'EAU

(30) Priorität: 28.11.2011 DE 102011087202
(43) Veröffentlichungstag der Anmeldung: 08.10.2014
(73) Patentinhaber: BSH Hausgeräte GmbH, 81739 München (DE)
(72) Erfinder: EGLMEIER, Hans, 10587 Berlin (DE)
(86) Internationale Anmeldenummer: PCT/EP2012/073030
(87) Internationale Veröffentlichungsnummer: WO 2013/079348

(56) Entgegenhaltungen:
- EP-A1- 0 441 756
- DE-A1-102007 052 074
- US-A- 2 555 400

## Beschreibung

Die Erfindung betrifft ein Filter für ein wasserführendes Haushaltsgerät sowie ein wasserführendes Haushaltsgerät, insbesondere ein Wäschebehandlungsgerät zum Waschen von Wäsche, mit einem Filter. Speziell betrifft die Erfindung das Gebiet der Waschmaschinen und Waschtrockner, bei denen ein Filter im Abpumpstrang angeordnet ist.

In wasserführenden Haushaltsgeräten ist es denkbar, dass zur Mehrfachverwendung von speziellen Wasseranteilen diese in einem ersten Schritt zumindest von groben Partikeln, insbesondere Haaren und Flusen, befreit werden. Solche speziellen Wasseranteile eignen sich zum Beispiel zum Wiederverwenden des letzten Spülwassers in einer Waschmaschine für einen folgenden Waschprozess, zum Verwenden des Kondensats in einem Kondensationstrockner, insbesondere Wärmepumpentrockner, zum Freispülen des Verdampfers und für vergleichbare Zwecke zum Reduzieren des Wasserverbrauchs. Allerdings bedingt ein für diesen Zweck eingesetztes Filter einen regelmäßigen Wartungsaufwand durch den Benutzer oder eine technische Vorrichtung zum automatischen Abreinigen des Filters. Hierbei müssen regelmäßig Filterrückstände beziehungsweise ein Filterkuchen beseitigt werden.

Zum Thema der Reinigung und eventuellen Wiederverwendung einer Waschlauge wird verwiesen auf das Dokument DE 10 2008 042 749 A1. Zum Thema der Verwendung eines Kondensats zu einem Reinigungszweck in einem Wäschetrockner wird verwiesen auf die Dokumente EP 2 134 896 B1 und EP 2 324 152 B1.

Aus dem Dokument DE 1 785 610 B gehen ein Filter für eine Wäschebehandlungsmaschine sowie eine damit ausgerüstete Wäschebehandlungsmaschine hervor. Dieser Filter beinhaltet ein Filterelement zum Filtern einer umlaufenden Wasch- oder Spüllauge und ist derart eingerichtet, dass dessen Säuberung durch eine Umleitung der Lauge erfolgt, wobei das Filterelement zum Reinigen entgegengesetzt zu einer üblichen Strömungsrichtung von der Lauge durchströmt wird. Dazu hat der Filter mehrere Eingänge und Ausgänge, welche durch Verschieben eines Ventilelements, welches das Filterelement enthält, auswählbar sind.

Weitere Filtereinrichtungen für Waschmaschinen sind aus EP 0 441 756 A und US 2 355 400 A bekannt. Diese Filtereinrichtungen weisen ein Filterelement auf, welches um eine Achse schwenkbar und in einem im Wesentlichen zylindrischen Innenraum des Filtergehäuses angeordnet ist.

Aufgabe der Erfindung ist es, ein Filter und ein wasserführendes Haushaltsgerät anzugeben, die eine verbesserte Funktionsweise ermöglichen und bei denen insbesondere der von einem Benutzer durchzuführende Wartungsaufwand verringert ist.

Die Aufgabe wird durch ein Filter, das Insbesondere für wasserführende Haushaltsgeräte dient und gemäß dem Anspruch 1 ausgebildet ist, und durch ein wasserführendes Haushaltsgerät, das insbesondere als Wäschebehandlungsgerät zum Waschen von Wäsche dient und gemäß Anspruch 9 ausgebildet ist, gelöst, wobei in dem Haushaltsgerät der Filter vorgesehen ist.

Es sind ein Filtergehäuse und zumindest ein in dem Filtergehäuse angeordnetes Filterelement vorgesehen, wobei das Filtergehäuse einen Eingang und einen Ausgang aufweist und wobei das Filterelement so um eine Achse schwenkbar ist, dass das Filterelement bezüglich einer Fließrichtung von dem Eingang zu dem Ausgang entgegengesetzt durchströmbar ist.

Ferner ist auch vorgesehen, dass das Filtergehäuse einen Innenraum mit einem zumindest näherungsweise zylindrischen Abschnitt aufweist, dass das Filterelement in dem zylinderischen Abschnitt des Innenraums angeordnet ist, dass das Filterelement eine elliptische Querschnittsfläche aufweist und dass die Länge der Nebenachse der elliptischen Querschnittsfläche zumindest näherungsweise gleich dem Innendurchmesser des zylindrischen Abschnitts des Innenraums ist. Hierdurch ist eine bevorzugte Bauform des Filters gegeben, die insbesondere durch eine zylindrische Form des Filtergehäuses in Kombination mit der elliptischen Form des Filterelements realisierbar ist. Diese Ausgestaltung ergibt eine sehr kompakte Ausgestaltung des Filters, das hierdurch insbesondere als Filtermodul ausgestaltet werden kann, welches sich direkt längs in eine Abwasserleitung des wasserführenden Haushaltsgeräts einsetzen lässt. Durch die Bauform ergibt sich eine sehr große durchströmbare Filterfläche im Vergleich zum Durchmesser des Filtergehäuses. Hierdurch lässt sich die in wasserführenden Haushaltsgeräten ohnehin vorhandene Leitungslänge (Wasserberg) in eine große Querschnittsfläche des Filterelements (Filterfläche) umsetzen.

Durch die in den abhängigen Patentansprüchen, nachfolgender Beschreibung oder beigefügter Zeichnung aufgeführten Maßnahmen sind vorteilhafte Weiterbildungen des erfindungsgemäßen Filters und des erfindungsgemäßen wasserführenden Haushaltsgeräts möglich.

In vorteilhafter Weise kann ein wartungsfreies Filter, insbesondere ein sich automatisch reinigendes Partikelfilter für wasserführende Haushaltsgeräte realisiert werden. Hierbei ist es möglich, das rückspülbare Filter mit einem ausreichend großen Wasserdruck und einer großen Menge an Filterspülwasser zu spülen. Die Reinigungswirkung und -dauer ist dann entsprechend groß. Hierbei wird außerdem verhindert, dass die Filterrückstände gewissermaßen rückwärts In das System gespült werden. Mögliche negative Auswirkungen auf tiefer im System befindliche Komponenten, insbesondere eine Laugenpumpe, werden hierdurch von vornherein verhindert.

Vorteilhaft ist es, dass das Filterelement schräg zu der Fließrichtung in dem Filtergehäuse angeordnet ist. Hierdurch steht in Bezug auf den Strömungsquerschnitt des Filtergehäuses eine große Querschnittsfläche des Filterelements zur Verfügung, so dass ein Zusetzen des Filterelements vermieden wird und eine ausreichende Strömung durch das Filter gewährleistet bleibt. Hierdurch reduziert auch ein Staudruck am Filterelement, so dass sich die Filterrückstände nicht allzu fest am Filterelement festsetzen und nach dem Schwenken des Filterelements ein Lösen und Abtransport der Filterrückstände möglich ist.

Vorteilhaft ist es auch, dass die Achse des Filterelements zumindest näherungsweise mittig in einer Querschnittsfläche des Filterelements liegt. Hierdurch sind die Kräfte, die zum Schwenken des Filterelements erforderlich sind, vergleichsweise gering. Dadurch vereinfacht sich die Mechanik zum Schwenken des Filterelements.

Allerdings ist es auch vorteilhaft, dass die Achse des Filterelements außermittig in einer Querschnittsfläche des Filterelements liegt, wobei die Achse des Filterelements bezüglich einer mittigen Lage in der Fließrichtung versetzt ist. Hierdurch kann gewissermaßen eine asymmetrische Gestaltung des Filters bezüglich der Achse (Drehachse) erzielt werden. Dies führt bei einer Durchströmung des Filters zu einem Drehmoment auf das Filterelement in eine Richtung, die die aktuelle Position stabilisiert. Dieses Drehmoment kann dazu dienen, zumindest einen Teil des erforderlichen Halte- oder Dichtdrucks, gegebenenfalls auch des Schaltdrucks, aufzubringen, aufrechtzuerhalten oder zu verstärken. Zusätzlich oder alternativ ist auch eine asymmetrische Durchlässigkeit des Filterelements denkbar. Beispielsweise kann dies durch unterschiedliche Lochdichten und Lochgrößen in verschiedenen Bereichen der Querschnittsfläche realisiert werden. Je nach Anwendungsfall kann dies eine vereinfachte Mechanik zum Schwenken des Filters ermöglichen.

Vorteilhaft ist es auch, dass eine Messeinrichtung vorgesehen ist, die zumindest mittelbar einen Strömungswiderstand des Filterelements bei dem Schwenken des Filterelements um die Achse misst. Dies ist speziell bei einer asymmetrischen Ausgestaltung des Filterelements von Vorteil. Beispielsweise kann die Messung des Strömungswiderstands beim Schwenken durch Messen des auf das Filterelement an seiner Achse wirkenden Drehmoments gemessen werden. Hierdurch wird ein Rückschluss auf den Verstopfungsgrad des Filterelements oder auf den Erfolg eines durchgeführten Reinigungszyklus oder die aktuelle Belastung des Wassers mit Partikeln oder anderen Verschmutzungen möglich. Der Erfolg des Reinigungszyklus kann beispielsweise durch den Vergleich eines Messergebnisses nach dem durchgeführten Reinigungszyklus mit einem Messergebnis vor dem durchgeführten Reinigungszyklus bestimmt werden. Die aktuelle Belastung des Wassers mit Partikeln oder anderen Fremdstoffen kann beispielsweise durch Messen der zeitlichen Änderung des Drehmoments bestimmt werden. Anhand der Messung bzw. der Messungen können dann geeignete Maßnahmen eingeleitet werden. Denkbar ist etwa ein sich anschließender Reinigungszyklus. Möglich ist auch die Ausgabe eines Hinweises zum Filterwechsel an den Benutzer.

Die Messung des Drehmoments durch die Messeinrichtung kann beispielsweise mit einem zusätzlichen Sensor, beispielsweise einem Kraft- oder Torsionssensor, insbesondere einem Dehnungsmessstreifen oder einem piezoelektrischen Element, erfolgen. Die Messung kann auch direkt durch die Aktorik erfolgen, die auch zum Schwenken bzw. Verstellen des Filterelements dient. Hierbei können beispielsweise die Induktion im Ansteuermagneten oder der Motorstrom gemessen werden. Möglich ist in diesem Zusammen hang auch eine Messung der Geschwindigkeit des Schwenkvorgangs (Umschaltvorgangs) als Funktion des Schaltwinkels oder dergleichen.

Vorteilhaft ist auch eine Ausgestaltung, bei der die Messeinrichtung den Verstopfungsgrad des Filterelements über den Arbeitspunkt einer Pumpe, insbesondere einer Laugenpumpe, die das Filter versorgt, misst. Speziell ist dies bei einem wasserführenden Haushaltsgerät mit einer Pumpe, die von einem bürstenlosen Gleichstrommotor angetrieben wird, in relativ einfacher Weise ohne weitere Sensorik realisierbar.

Vorteilhaft ist es, dass eine magnetische Betätigungseinrichtung vorgesehen ist, die zum Schwenken des Filterelements dient. Hierbei ist es ferner vorteilhaft, dass an dem Filterelement zumindest ein Permanentmagnet angeordnet ist, dass die magnetische Betätigungseinrichtung zumindest ein magnetisches Element aufweist, das dem Permanentmagneten des Filterelements zugeordnet ist, und dass das magnetische Element an dem Gehäuse angeordnet ist. Allerdings ist es auch vorteilhaft, dass das Filterelement ein ferromagnetisches Element aufweist und/oder dass das Filterelement als zumindest teilweise ferromagnetisches Filterelement ausgestaltet ist und dass die magnetische Betätigungseinrichtung zumindest ein erstes magnetisches Element und zumindest ein zweites magnetisches Element aufweist, die zum Schwenken des Filterelements wechselweise auf das ferromagnetische Element des Filterelements beziehungsweise auf das Filterelement einwirken.

Da die Schwenkbewegung des Filterelements mit den genannten, geeigneten Maßnahmen sehr leichtgängig ausgestaltet werden kann und gegebenenfalls nur ein geringer Winkel für die Schwenkbewegung erforderlich ist, den das Filterelement überstreichen muss, und da zugleich über den Staudruck hohe Anlege- und Dichtkräfte erzeugt werden können, ist auch eine einfache magnetische Einkoppelung zur Erzielung der Schwenkbewegung von außen möglich. Ein von einem außen am Filtergehäuse befindlichen Elektromagneten erzeugtes Magnetfeld kann hierbei direkt auf den schwenkbaren, ferromagnetisch ausgeführten Filterträger des Filterelements einwirken. Dadurch kann die sonst notwendige Gehäusedurchführung für eine Welle mit zugehöriger Dichtung eingespart werden. Das Filter kann hierdurch deutlich einfacher und preisgünstiger ausgeführt werden. Entsprechendes gilt für die Einkopplung mechanischer Bewegungen von außen in das Filtergehäuse, beispielsweise mit einem sich bewegenden Permanentmagneten. Auch der Einsatz eines Elektromagneten ist möglich. Speziell können zwei außen liegende Elektromagneten für die beiden Positionen des Filterelements vorgesehen sein. Auch eine Lösung mit einem umpolbaren Elektromagneten und einem polarisierten Filterträger des Filterelements ist denkbar. Hierbei kann das Filterelement aus einem Filterträger und einer in dem Filterträger angeordneten Filterlage bestehen. Der Filterträger oder Teile des Filterträgers können dann als Permanentmagnet ausgelegt sein. Außerdem können durch die Bauart des schwenkbaren Filterelements spezielle Effekte, wie beispielsweise eine magnetische Reluktanz, vorteilhaft genutzt werden.

Die Ansteuerung des Filterelements des Filters kann je nach Anwendungsfall mit einer geeigneten Aktorik erfolgen. Beispielsweise kann solch eine Aktorik über einen Stellmotor, über Elektromagnete, thermische Aktoren oder hydraulische Aktoren realisiet werden. Als thermische Aktoren können beispielsweise Bimetallaktoren oder Phasenwechselaktoren dienen. Hydraulische Aktoren können insbesondere auch direkt durch den Staudruck im Filter angetriebene Aktoren sein. Bei thermischen Aktoren kann in einer integrierten Bauform durch einen engen Kontakt zwischen einem aktiven Aktor und Teilen des Filtermoduls oder des Leitungssystems über das durchfließende Wasser eine schnelle Kühlung und damit eine Verringerung der Schaltzeiten erreicht werden. Somit ergibt sich ein breiter Anwendungsbereich.

Möglich ist auch der Einsatz von bistabilen Wechselaktoren. Nach jedem Umschalten der Filterposition des Filterelements befindet sich das Filterelement beziehungsweise der Filtereinsatz zunächst in einer Freispülposition, was unabhängig von der tatsächlich eingenommenen Position ist. Das bedeutet, dass ein durchgehender Volumenstrom die Filterrückstände mitnimmt. Das Umschalten in die Freispülposition erfolgt hierbei vorzugsweise im Abpumpmodus. Ein geeignetes Ventil kann beispielsweise hierfür vom Umpumpmodus in den Abpumpmodus schalten. Nach einer bestimmten Zeit sind die Filterrückstände mit dem durchfließenden Wasser ausgespült. Es muss hierfür mindestens der Inhalt der halben Filterkammer sowie die Leitung zwischen dem Filter und dem Ventil weitergeschoben werden. Dieses Volumen ist konstruktiv vorzugsweise sehr klein vorgegeben. Dann kann ohne weitere Filterumstellung das Ventil umschalten und das Wasser zur anderweitigen Verwendung in den entsprechenden Zweig, beispielsweise in einen Wasserspeicher, lenken. Somit muss die Steuerung des wasserführenden Haushaltsgeräts die Position des Filterelements nicht notwendigerweise kennen beziehungsweise erfassen oder steuern. Die Steuerung kann nämlich lediglich den Umschaltzeitpunkt vorgeben. Hierdurch können einfachere Aktoren zum Einsatz kommen, beispielsweise ein Hubaktor, insbesondere ein Hubmagnet, in Verbindung mit einem T-Flip-Flop, das entsprechend einer Kugelschreibermechanik arbeitet. Jeder Impuls auf den Aktor führt dann zu einem Verschwenken des Filterelements in die jeweils gegenüberliegende Position.

Die Ansteuerung des Filterelements des Filters kann auch zusammen mit dem nachgeschalteten Ventil erfolgen. Beispielsweise kann das Filterelement jedes Mal seine Position wechseln, wenn das Ventil auf Abpumpen geschaltet wird. Dadurch wird bei jedem Abpumpen der letzte Filterkuchen ausgespült, während sich auf der anderen Seite des Filters langsam ein neuer ansammelt. Je nach Anfall von Flusen, Haaren oder anderen Verschmutzungen kann neben einer elektrischen Koppelung auch eine mechanische Koppelung von Ventil und Filter ausreichen, um automatisch das Filter regelmäßig zu reinigen. Beispielsweise kann ein T-Flip-Flop zwischen das Ventil und das Filter geschaltet sein. Hierdurch ist das Schalten ohne zusätzlichen Steueraufwand möglich. Dies ist besonders bei einem sehr geringen Partikelanfall von Vorteil. Bei einer Auslegung für einen sehr starken Partikelanfall ist allerdings eine Ausgestaltung von Vorteil, bei der das Filterelement auch zwischendurch umgeschaltet wird.

Bei der Ausgestaltung des Filters sind auch spezielle Filtervarianten mit einer Vorzugslage des Filterelements möglich. Das Filterelement kann dann beispielsweise nur einseitig benutzt werden. Der Aktor schwenkt bei dieser Ausgestaltung das Filterelement während des Abpumpens zum Reinigen in die entgegengesetzte Position, so dass die Filterrückstände abgespült und mit dem Abwasser abtransportiert werden. Danach schwenkt das Filterelement, beispielsweise angetrieben durch eine Feder, den Wasserdruck, die Schwerkraft, eine Magnetkraft oder eine andere Rückstellkraft, zurück in die Ausgangslage. Hierdurch kann die Aktorik vereinfacht werden.

Denkbar ist es auch, dass eine Mittelstellung des Filterelements im Abpumpmodus gehalten werden kann, um gleichzeitig beide Seiten des Filterelements quer zu spülen. Hierbei ist die Filterfunktion temporär nicht aktiv. Dies ist speziell für einen Abpumpmodus von Vorteil. Zum einen wird während des Abpumpens eine beginnende Zusetzung des Filterelements vermieden. Zum anderen muss die Pumpe dann nicht den Staudruck des Filterelements überwinden.

Vorteilhaft ist es auch, dass ein Mechanismus zur Stabilisierung der Positionen des Filterelements vorgesehen ist. Hierdurch kann das Filterelement in den Endpositionen durch einen Halte- oder Rastmechanismus so stabilisiert werden, dass die Endpositionen auch bei wegfallender Ansteuerung und nicht haltendem Steuermechanismus erhalten bleiben. Insbesondere können auch magnetische Rast- und Haltemechanismen realisiert werden, was speziell beim Einsatz einer magnetischen Einkoppelung der Bewegung vorteilhaft ist.

Vorteilhaft ist es auch, dass ein Mechanismus zur manuellen Ansteuerung des Filters durch einen Benutzer vorgesehen ist. Beispielsweise kann durch Messung bestimmt werden, dass ein Schwenken des Filterelements zum Reinigen erforderlich ist. Dies kann dem Benutzer angezeigt werden. Möglich ist auch, dass der Benutzer turnusmäßig ein Schwenken des Filterelements veranlasst. Der Mechanismus zum manuellen Ansteuern kann beispielsweise durch ein mechanisches Bedienelement, insbesondere einen Stellhebel, realisiert werden.

Vorteilhaft ist auch ein Mechanismus zum Auskoppeln der Bewegung zum Filterschwenken aus vorhandenen Bewegungen des wasserführenden Haushaltsgeräts. Beispielsweise kann das Filter beim Schließen der Tür des wasserführenden Haushaltsgeräts am Anfang des Waschprozesses umgeschaltet werden. Wenn das Waschwasser abgepumpt wird, dann wird somit auch das Filter gereinigt. Entsprechend dem Programmablauf ist es sinnvoll, wenn Wasseranteile aus späteren Programmschritten, beispielsweise das letzte Spülwasser, wiederverwendet wird, da dieses am saubersten ist. Diese Wasseranteile treffen dann auf ein vor kurzem frisch gereinigtes Filter. Somit ist die Filterwirkung gerade am Ende des Programmablaufs gewährleistet.

Vorteilhaft ist auch ein selbsttätiges hydraulisches Umschalten des Filters beim Einschalten der Pumpe. Dies kann beispielsweise über einen Staudruckaktor, der in ein Filtermodul integriert ist, realisiert werden. Je nach Anwendungsfall können hierbei ein Verlust des Anteils des Wassers, der jedes Mal beim Anlaufen der Pumpe zum Abreinigen des Filters benutzt wird, oder eine geringe Startkontamination beim wiederverwendeten Wasser in Kauf genommen werden. Die Ansteuerung eines Schaltventils kann entsprechend erfolgen.

Möglich ist auch die Anwendung eines besonders intensiven Reinigungsverfahrens, beispielsweise durch wiederholtes Umschalten des Filters im Abpumpmodus mit einem angepassten Abwasservolumenstrom. Dies ist besonders beim Einsatz einer Pumpe mit einem bürstenlosen Gleichstrommotor durch kurzzeitiges Überhöhen des Volumenstroms möglich, da bei einer kurzen Dauer eine Beschädigung des Pumpenmotors verhindert ist. Somit kann die Reinigungswirkung gesteigert werden.

Speziell beim Einsatz einer Pumpe mit einem bürstenlosen Gleichstrommotor kann ein Leerlaufen eines Pumpensumpfs, das heißt ein sich anbahnendes Schnorcheln, rechtzeitig erkannt werden und ein Schwenken des Filterelements zum Abreinigen eingeleitet werden. Dadurch wird verhindert, dass ein sich ansammelnder Filterkuchen durch Austrocknen auf einer Filtermatte oder dergleichen festbäckt. Bei einer nicht bekannten Restwassermenge können in vorteilhafter Weise zumindest beim letzten Abpumpen einige Reinigungszyklen nacheinander auf das schwenkbare Filter aufgeschaltet werden, um festbackende Reste zu minimieren.

Bevorzugte Ausführungsbeispiele der Erfindung sind in der nachfolgenden Beschreibung unter Bezugnahme auf die Figuren der beigefügten Zeichnung, in denen einander entsprechende Elemente mit übereinstimmenden Bezugszeichen versehen sind, näher erläutert. Es zeigen:
- Fig. 1: ein wasserführendes Haushaltsgerät in einer auszugsweisen, schematischen Darstellung entsprechend einem ersten Ausführungsbeispiel;
- Fig. 2: ein Filter des in Fig. 1 dargestellten wasserführenden Haushaltsgeräts des ersten Ausführungsbeispiels in einer auszugsweisen, schematischen Schnittdarstellung;
- Fig. 3: ein Filter in einer auszugsweisen, schematischen Schnittdarstellung entsprechend einem zweiten Ausführungsbeispiel;
- Fig. 4: ein Filter in einer auszugsweisen, schematischen Schnittdarstellung entsprechend einem dritten Ausführungsbeispiel;
- Fig. 5: ein Filterelement des in Fig. 4 dargestellten Filters des dritten Ausführungsbeispiels in einer schematischen Darstellung;
- Fig. 6: ein Filter in einer auszugsweisen, schematischen Schnittdarstellung entsprechend einem vierten Ausführungsbeispiel und
- Fig. 7: ein Filter in einer auszugsweisen, schematischen Schnittdarstellung entsprechend einem fünften Ausführungsbeispiel.

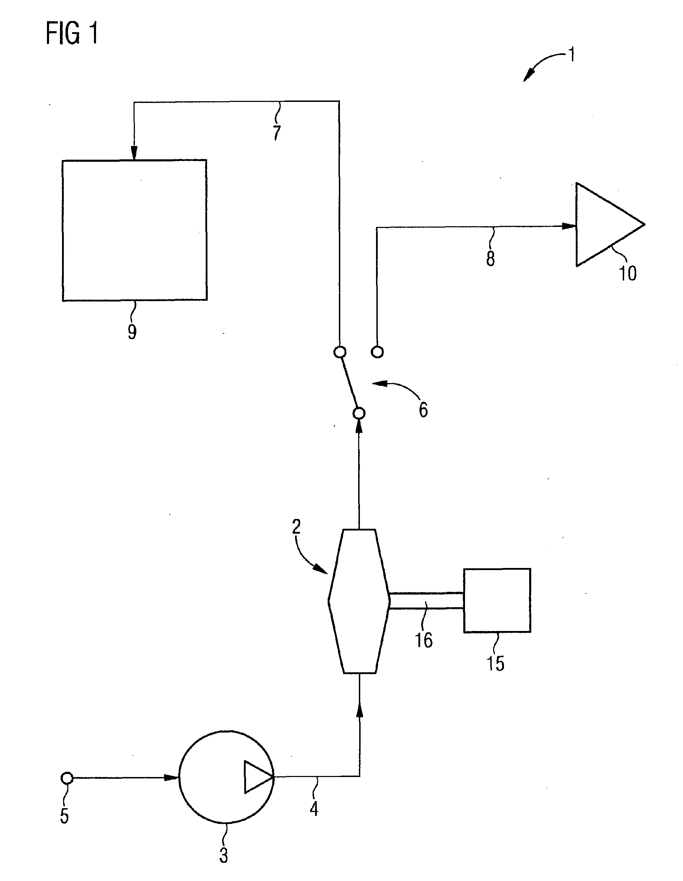

Fig. 1 zeigt ein wasserführendes Haushaltsgerät 1 in einer auszugsweisen, schematischen Darstellung entsprechend einem ersten Ausführungsbeispiel. Das wasserführende Haushaltsgerät 1 kann insbesondere als Wäschebehandlungsgerät ausgestaltet sein und zum Waschen sowie gegebenenfalls zum Trocknen von Wäsche dienen. Speziell kann das wasserführende Haushaltsgerät 1 als Waschmaschine oder Waschtrockner ausgestaltet sein. Das wasserführende Haushaltsgerät 1 weist ein Filter 2 auf. Solch ein Filter 2 eignet sich besonders für ein wasserführendes Haushaltsgerät 1, das als Wäschebehandlungsgerät ausgestaltet ist. Das wasserführende Haushaltsgerät 1 und das Filter 2 eignen sich in entsprechend angepasster Abwandlung allerdings auch für andere Anwendungsfälle.

Das Haushaltsgerät 1 weist eine Pumpe 3 auf. In diesem Ausführungsbeispiel ist die Pumpe 3 als Laugenpumpe 3 ausgestaltet. Die Laugenpumpe 3 fördert über eine Leitung 4 Wasser zu dem Filter 2. An einer Saugseite 5 der Laugenpumpe 3 ist beispielsweise ein Laugenbehälter angeschlossen. Hierdurch kann eine Lauge oder ein Spülwasser aus solch einem Laugenbehälter von der Laugenpumpe 3 durch das Filter 2 gefördert werden.

Das Haushaltsgerät 1 weist außerdem ein Ventil 6 auf, das als Schaltventil, insbesondere Wechselventil 6, ausgestaltet ist. In diesem Ausführungsbeispiel ermöglicht das Wechselventil 6 ein Umschalten zwischen einem Speicherstrang 7 und einem Abwasserstrang 8. Das Ventil 6 ist dem Filter 2 in Strömungsrichtung beziehungsweise Pumprichtung nachgeordnet. Der Speicherstrang 7 führt zu einem Tank 9, der als temporärer Speicher 9 für wiederzuverwendendes Wasser dient. Der Abwasserstrang 8 führt zu einem Ausgang 10 für Schmutzwasser. Somit kann das Wechselventil 6 geeignet geschaltet werden, um entweder ein Abpumpen oder ein Speichern von Wasser zu ermöglichen.

Je nach Ausgestaltung des Haushaltsgeräts 1 kann die Saugseite 5 der Pumpe 3 auch mit einer anderen Grauwasserquelle verbunden sein. Dadurch kann das Haushaltsgerät 1 beispielsweise auch als Geschirrspüler 1 ausgestaltet sein.

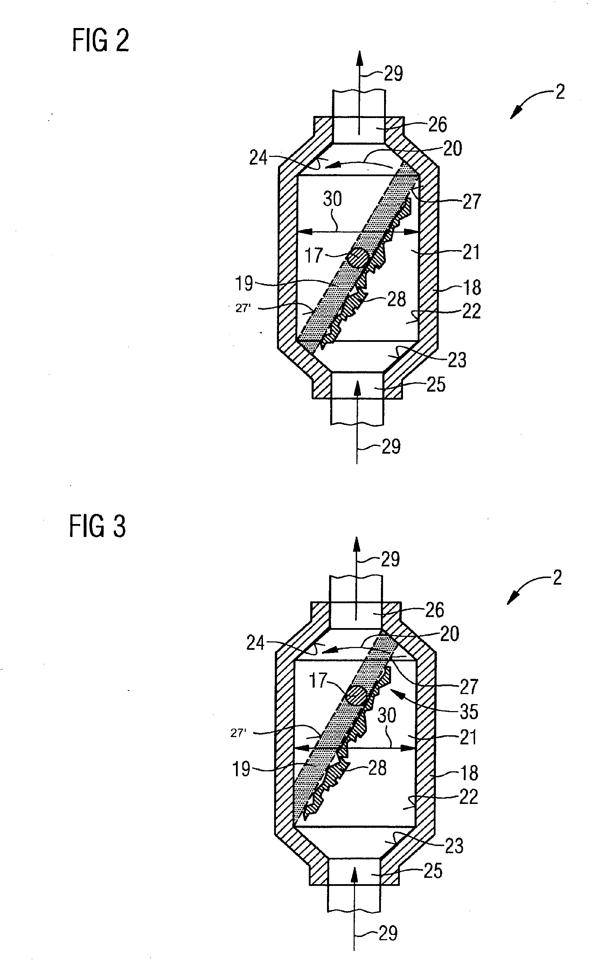

Das Haushaltsgerät 1 weist außerdem eine Messeinrichtung 15 auf. Die Messeinrichtung 15 umfasst eine Welle 16, die mit einer Achse 17 (Fig. 2) des Filters 2 verbunden ist. Die Messeinrichtung 15 kann so ausgestaltet sein, dass ein Zustand des Filters 2, insbesondere eine Verschmutzung des Filters 2, erfassbar ist.

Fig. 2 zeigt das Filter 2 des in Fig. 1 dargestellten Haushaltsgeräts 1 in einer auszugsweisen, schematischen Schnittdarstellung. Das Filter 2 weist ein Filtergehäuse 18 und ein in dem Filtergehäuse 18 angeordnetes Filterelement 19 auf. Das Filterelement 19 ist hierbei um die Achse 17 schwenkbar, wie es durch einen Pfeil 20 veranschaulicht ist. Hierdurch ergeben sich zwei Endpositionen, von denen eine in der Fig. 2 dargestellt ist und zwischen denen das Filterelement 19 hin und her geschwenkt werden kann.

Das Filtergehäuse 18 weist einen Innenraum 21 mit einem zylindrischen Abschnitt 22 sowie konischen Abschnitten 23, 24 auf. Außerdem weist das Filtergehäuse 18 einen Eingang 25 und einen Ausgang 26 auf. Das Filterelement 19 erstreckt sich in diesem Ausführungsbeispiel so durch den Innenraum 21, dass es durch den zylindrischen Abschnitt 22 und teilweise in die konischen Abschnitte 23, 24 ragt.

Wenn die Pumpe Wasser, also insbesondere Abwasser oder Spülwasser, durch das Filter 2 führt, dann gelangt das Wasser über den Eingang 25 zunächst in den konischen Abschnitt 23 des Innenraums 21, dann durch den Innenraum 21, durch den sich das Filterelement 19 erstreckt, dann durch den konischen Abschnitt 24 des Innenraums 21 und anschließend zu dem Ausgang 26. Beim Durchströmen des Innenraums 21 passiert das Wasser das Filterelement 19, so dass Schmutzstoffe gefiltert werden und sich an einer Seite 27 des Filterelements 19 Filterrückstände 28 ansammeln. Hierbei tritt das durch das Filterelement 19 geführte Wasser im gefilterten Zustand an einer anderen Seite 27' des Filterelements 19 aus dem Filterelement 19 in gefiltertem Zustand aus.

Durch Betätigen des Filterelements 19, was beispielsweise durch mechanische Einwirkung auf die Achse 17 möglich ist, gelangt das Filterelement 19 in die entgegengesetzte Endposition.

Bei der in der Fig. 2 veranschaulichten Stellung des Filterelements 19 durchströmt das Wasser das Filterelement 19 von der Seite 27 zu der Seite 27'. In der entgegengesetzten

Position durchströmt das Wasser dann das Filterelement 19 von der Seite 27' zu der Seite 27 hin. In Bezug auf eine Fließrichtung 29 des Wassers von dem Eingang 25 zu dem Ausgang 26 wird das Filterelement 19 somit dann entgegengesetzt durchströmt. Die Filterrückstände 28 befinden sich in der Fließrichtung 29 gesehen dann hinter dem Filterelement 19. Dadurch ist ein Abtransport der Filterrückstände 28 über den Ausgang 26 ermöglicht.

Somit ist im Filterbetrieb durch Umschalten der Position des Filterelements 19 ein Freispülen des Filters 2 mit einem Abtransport der Filterrückstände (Filterkuchen) 28 möglich.

Da das Filterelement 19 schräg zu der Fließrichtung 29 in dem Filtergehäuse 18 angeordnet ist, kann die Querschnittsfläche des Filterelements 19 vergrößert werden. Hierdurch kann ein Innendurchmesser 30 des Innenraums 21 des Filtergehäuses 18 reduziert werden. Außerdem liegt in diesem Ausführungsbeispiel die Achse 17 des Filterelements 19 mittig in der Querschnittsfläche des Filterelements 19. Die Querschnittsfläche 27, 27' ergibt sich hierbei durch die Fläche der Seite 27 beziehungsweise der Seite 27'.

Fig. 3 zeigt ein Filter in einer auszugsweisen, schematischen Schnittdarstellung entsprechend einem zweiten Ausführungsbeispiel. In diesem Ausführungsbeispiel ist die Achse 17 des Filterelements 19 außermittig in der Querschnittsfläche 27, 27' des Filterelements 19 angeordnet. Hierbei ist die Achse 17 des Filterelements 19 bezüglich einer mittigen Lage, wie sie in der Fig. 2 veranschaulicht ist, in der Fließrichtung 29 versetzt. Somit ist die Achse 17 von der mittigen Lage zu dem Ausgang 26 hin in der Querschnittsfläche des Filterelements 19 versetzt. Das durch das Filter 2 strömende Fluid erzeugt daher in Bezug auf die als Drehachse 17 dienende Achse 17 eine asymmetrische Beaufschlagung des Filterelements 19 und somit in Bezug auf die Achse 17 ein Drehmoment. Dieses durch den Wasserfluss erzeugte Drehmoment kann als stabilisierendes Drehmoment genutzt werden. Hierdurch können je nach Ausgestaltung und Anwendungsfall kleinere Schalt- und/oder Haltekräfte ermöglicht werden. Beispielsweise wirkt das Drehmoment in der in der Fig. 3 dargestellten Stellung des Filterelements 19 einem Öffnen des Filterelements in der Richtung 20 entgegen. Somit wird die in der Fig. 3 dargestellte Endposition des Filterelements 19 stabilisiert. Außerdem ist eine ungleichmäßige Ansammlung der Filterrückstände 28 an dem Filterelement 19 möglich, bei der sich die Filterrückstände 28 verstärkt in einem Bereich 35 der Seite 27 des Filterelements 19 ansammeln. Somit wird im Bereich 35 ein größerer Strömungswiderstand erzielt. Zum Umschwenken des Filterelements 19 ist dann nur eine reduzierte Schaltkraft erforderlich.

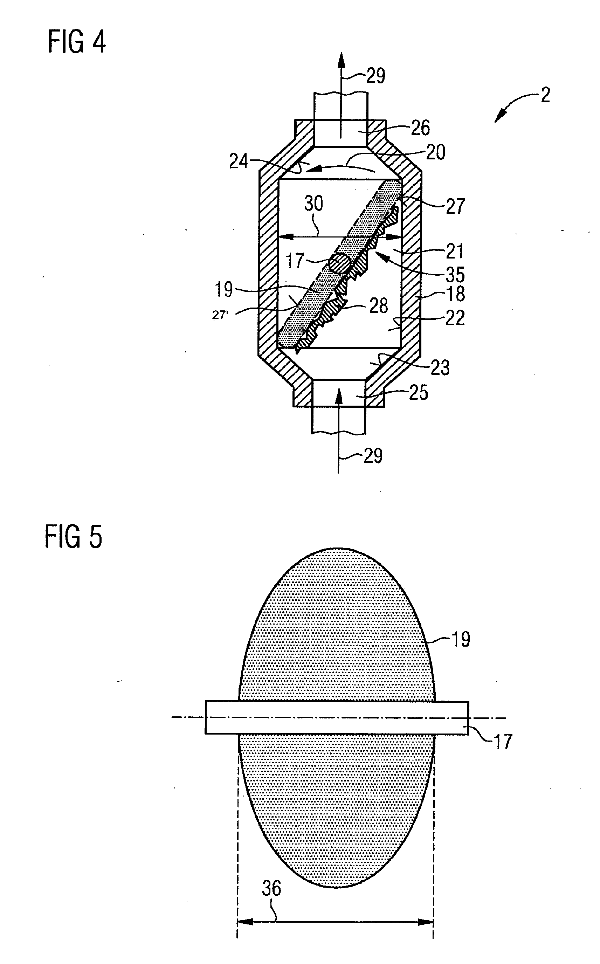

Fig. 4 zeigt ein Filter 2 in einer auszugsweisen, schematischen Schnittdarstellung entsprechend einem dritten Ausführungsbeispiel. In diesem Ausführungsbeispiel ist das Filterelement 19 in dem zylindrischen Abschnitt 22 des Innenraums 21 angeordnet. Der Innenraum 21 ist hierbei als länglicher Innenraum 21 ausgestaltet, wobei das Filterelement 19 in seinen Endpositionen bezüglich der Fließrichtung 29 schräg im Innenraum 21 angeordnet ist. Hierdurch kann die Länge des Innenraums 21 genutzt werden, um eine große Querschnittsfläche beziehungsweise große Seiten 27, 27' des Filterelements 19 zu ermöglichen. Der Innendurchmesser 21 ist vorzugsweise knapp größer als ein Leitungsdurchmesser. Als weiterer Vorteil ergibt sich hierdurch ein geringer Schwenkwinkel zum Umschalten der Durchströmungsrichtung des Filterelements 19.

Fig. 5 zeigt das Filterelement 19 des in Fig. 4 dargestellten Filters 2 entsprechend dem dritten Ausführungsbeispiel in einer schematischen Darstellung. Das Filterelement 19 weist eine elliptische Querschnittsfläche auf. Hierbei ist die Länge der Nebenachse 36 der elliptischen Querschnittsfläche gleich dem Innendurchmesser 30 des zylindrischen Abschnitts 22 des Innenraums 21. Das Filterelement 19 liegt in dem zylindrischen Abschnitt 22 in beiden Endpositionen ringsum an der Wandung an. Hierdurch ist eine einfache und reibungsfreie Abdichtung möglich. Das Filterelement 19 ist um die Achse 17 schwenkbar.

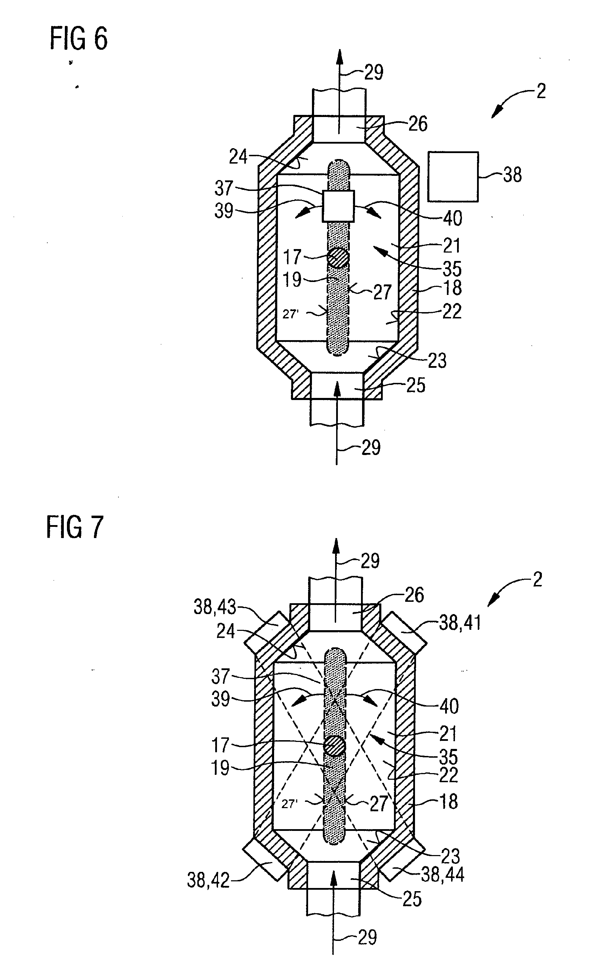

Fig. 6 zeigt ein Filter 2 in einer auszugsweisen, schematischen Schnittdarstellung entsprechend einem vierten Ausführungsbeispiel. In diesem Ausführungsbeispiel ist an dem Filterelement 19 des Filters 2 ein Permanentmagnet 37 angeordnet. Außerdem ist eine magnetische Betätigungseinrichtung 38 vorgesehen, die zum Schwenken des Filterelements 19 dient. Beispielsweise kann die magnetische Betätigungseinrichtung 38 eine Magnetspule aufweisen, so dass in Abhängigkeit von der Stromrichtung durch die Magnetspule der Permanentmagnet in einer Richtung 39 abgestoßen oder in einer Richtung 40 angezogen wird. Eine Spule 38 ist eine mögliche Ausgestaltung für ein magnetisches Element 38, das dem Permanentmagneten 37 zugeordnet ist. Es können auch mehrere magnetische Elemente vorgesehen sein. Außerdem kann das Filterelement 19 den Permanentmagneten 37 als integralen Bestandteil aufweisen. Beispielsweise kann das Filterelement 19 aus einem Filterträger und einer in dem Filterträger angeordneten Filterlage bestehen. Dann kann der Filterträger als Permanentmagnet 37 ausgestaltet sein.

Fig. 7 zeigt ein Filter 2 in einer auszugsweisen, schematischen Schnittdarstellung entsprechend einem fünften Ausführungsbeispiel. In diesem Ausführungsbeispiel weist die magnetische Betätigungseinrichtung 38 ein erstes Paar an magnetischen Elementen 41, 42 und ein zweites Paar an magnetischen Elementen 43, 44 auf. Beispielsweise können die magnetischen Elemente 41 bis 44 als Elektromagnete ausgestaltet sein. Die magnetischen Elemente 41 bis 44 sind an dem Filtergehäuse 18 angeordnet.

Das Filterelement 19 ist in diesem Ausführungsbeispiel als zumindest teilweise ferromagnetisches Filterelement 19 ausgestaltet. Beispielsweise kann ein Träger des Filterelements 19 ferromagnetisch ausgestaltet sein. Die magnetischen Elemente 41 bis 44 können als Elektromagnete mit Eisenkernen ausgestaltet sein. Die Pole liegen hierbei auf diagonal gegenüberliegenden Seiten des Filtergehäuses 18. Zum Schwenken des Filterelements 19 wird entweder das erste Paar 41, 42 oder das zweite Paar 43, 44 bestromt. Hierdurch erfährt das Filterelement 19 eine Kraft in Richtung einer Verkürzung der Luftstrecke im magnetischen Kreis. Wird beispielsweise das Paar 41, 42 der magnetischen Betätigungseinrichtung 38 bestromt, dann wird das ferromagnetische Filterelement 19 in der Richtung 40 betätigt. Durch Bestromung des zweiten Paars 43, 44 kann eine Betätigung in der Richtung 39 erfolgen.

Somit ergeben sich je nach Ausgestaltung des Filters 2 beziehungsweise des wasserführenden Haushaltsgeräts 1 mit dem Filter 2 mehrere Vorteile. Es ist eine einfache, kompakte und robuste Bauform für ein automatisch spülbares und damit für den Benutzer wartungsfreies Filter 2 für wasserführende Haushaltsgeräte 1 realisierbar, bei dem Teile des Abwassers wiederverwendet werden können. Das Filter 2 ist hierbei vorwärts spülbar, so dass der volle Pumpendruck und der gegebene Volumenstrom bei insgesamt praktisch beliebiger Wassermenge voll ausgeschöpft werden kann, um das Filter 2 frei zu spülen. Die Freispülwirkung ist gegenüber rückspülbaren Filtern deutlich erhöht.

Die zum Schwenken des Filters 2 erforderlichen Schaltenergien sind vergleichsweise gering, da ein nur sehr geringer Schaltweg realisiert werden kann. Hierdurch kann eine kompakte und Energie sparende Aktorik beziehungsweise Ansteuerung zum Einsatz kommen.

Die Filterdurchströmrichtung 29 und damit die Wahl der Funktion zum Freispülen oder Filtern kann auch während des Durchströmens des Filters 2 schnell umgeschaltet werden.

Außerdem können beide Seiten 27, 27' des Filterelements 19 abwechselnd zum Schmutzsammeln benutzt werden. Wegen der Reihenschaltung der beiden Seiten 27, 27' bezüglich der Eigenschaft des Schmutzsammelns ergeben sich hierbei besondere Vorteile in Bezug auf Asymmetrien beim Durchströmen nicht mehr freispülbarer Rückstände, die zu Verstopfungen führen. Denn durch die entgegengesetzte Durchströmung des Filterelements 19 können solche Filterrückstände 28 abtransportiert werden. Dies ist besonders bei faserartigen Filterrückständen 28, wie Haaren und Flusen, vorteilhaft.

Die Erfindung ist nicht auf die beschriebenen Ausführungsbeispiele beschränkt.

### Bezugszeichenliste

- 1: Wasserführendes Haushaltsgerät
- 2: Filter
- 3: Pumpe
- 4: Leitung
- 5: Saugseite
- 6: Ventil
- 7: Speicherstrang
- 8: Abwasserstrang
- 9: Tank
- 10: Ausgang
- 15: Messeinrichtung
- 16: Welle
- 17: Achse
- 18: Filtergehäuse
- 19: Filterelement
- 20: Pfeil
- 21: Innenraum
- 22: zylindrischer Abschnitt
- 23, 24: konischer Abschnitt
- 25: Eingang
- 26: Ausgang
- 27: Seite, Querschnittsfläche
- 27': Seite, Querschnittsfläche
- 28: Filterrückstände
- 28: Seite
- 29: Fließrichtung
- 30: Innendurchmesser
- 35: Bereich
- 36: Nebenachse
- 37: Permanentmagnet
- 38: magnetische Betätigungseinrichtung
- 41, 42: erstes Paar magnetischer Elemente
- 43, 44: zweites Paar magnetischer Elemente

## Patentansprüche

1. Filter (2), Insbesondere für wasserführende Haushaltsgeräte, mit einem Filtergehäuse (18), welches einen Eingang (25), einen Ausgang (26) und einen Innenraum (21) mit einem zumindest näherungsweise zylindrischen Abschnitt (22) aufweist, und zumindest einem Filterelement (19), welches in dem Filtergehäuse (18) und in dem zylindrischen Abschnitt (22) des Innenraums (21) angeordnet ist und welches so um eine Achse (17) schwenkbar ist, dass das Filterelement (19) bezüglich einer Fließrichtung (29) von dem Eingang (25) zu dem Ausgang (26) entgegengesetzt durchströmbar ist, **dadurch gekennzeichnet, dass** das Filterelement (19) eine elliptische Querschnittsfläche (27, 27') aufweist und dass die Länge der Nebenachse (36) der elliptischen Querschnittsfläche (27, 27') zumindest näherungsweise gleich dem Innendurchmesser (30) des zylindrischen Abschnitts (22) des Innenraums (21) ist.

2. Filter nach Anspruch 1, **dadurch gekennzeichnet, dass** das Filterelement (19) schräg zu der Fließrichtung (29) in dem Filtergehäuse (18) angeordnet ist.

3. Filter nach einem der Ansprüche 1 und 2, **dadurch gekennzeichnet, dass** die Achse (17) des Filterelements (19) zumindest näherungsweise mittig in einer Querschnittsfläche (27, 27') des Filterelements (19) liegt.

4. Filter nach einem der Ansprüche 1 und 2, **dadurch gekennzeichnet, dass** die Achse (17) des Filterelements (19) außermittig in einer Querschnittsfläche (27, 28) des Filterelements (19) liegt, wobei die Achse (17) des Filterelements (19) bezüglich einer mittigen Lage in der Fließrichtung (29) versetzt ist.

5. Filter nach einem der vorigen Ansprüche, **dadurch gekennzeichnet, dass** eine magnetische Betätigungseinrichtung (38) vorgesehen ist, die zum Schwenken des Filterelements (19) dient.

6. Filter nach Anspruch 5, **dadurch gekennzeichnet, dass** an dem Filterelement (19) zumindest ein Permanentmagnet (37) angeordnet ist, dass die magnetische Betätigungseinrichtung (38) zumindest ein magnetisches Element (38) aufweist, das dem Permanentmagneten (37) des Filterelements (19) zugeordnet ist, und dass das magnetische Element (38) an dem Filtergehäuse (18) angeordnet ist.

7. Filter nach Anspruch 5, **dadurch gekennzeichnet, dass** das Filterelement (19) ein ferromagnetisches Element (37) aufweist und/oder dass das Filterelement (19) als zumindest teilweise ferromagnetisches Filterelement (19) ausgestaltet ist und dass die magnetische Betätigungseinrichtung (38) zumindest ein erstes magnetisches Element (41, 42) und zumindest ein zweites magnetisches Element (43, 44) aufweist, die zum Schwenken des Filterelements (19) wechselweise auf das ferromagnetische Element (37) des Filterelements (19) beziehungsweise auf das Filterelement (19) einwirken.

8. Filter nach einem der Ansprüche 1 bis 4, **dadurch gekennzeichnet, dass** für die Ansteuerung des Filterelements (19) ein thermischer oder hydraulische Aktor oder ein Stellmotor vorgesehen ist.

9. Wasserführendes Haushaltsgerät (1), insbesondere Wäschebehandlungsgerät zum Waschen von Wäsche, mit einem Filter (2) nach einem der vorigen Ansprüche.

10. Wasserführendes Haushaltsgerät nach Anspruch 9, **dadurch gekennzeichnet, dass** eine Messeinrichtung (15) vorgesehen ist, die zumindest mittelbar einen Strömungswiderstand des Filterelements (19) bei dem Schwenken des Filterelements (19) um die Achse (17) misst.

11. Wasserführendes Haushaltsgerät nach Anspruch 10, **dadurch gekennzeichnet, dass** die Messeinrichtung (15) zur Messung eines Drehmoments ausgebildet ist.

12. Wasserführendes Haushaltsgerät nach einem der Ansprüche 10 und 11, **dadurch gekennzeichnet, dass** die Messeinrichtung (16) den Verstopfungsgrad des Filterelements (19) über den Arbeitspunkt einer Pumpe (3), insbesondere einer Laugenpumpe, die das Filter (2) versorgt, misst.

## Claims

1. Filter (2), in particular for water-bearing domestic appliances, with a filter housing (18), which has an input (25), an output (26) and an interior (21) with an at least approximately cylindrical section (22), and at least one filter element (19), which is arranged in the filter housing (18) and in the cylindrical section (22) of the interior (21) and which can be pivoted about an axis (17) such that the filter element (19) can be passed through in the opposite direction in respect of a flow direction (29) from the input (25) to the output (26), **characterised in that** the filter element (19) has an elliptical cross-sectional surface (27, 27') and that the length of the minor axis (36) of the elliptical cross-sectional surface (27, 27') is at least approximately equal to the inner diameter (30) of the cylindrical section (22) of the interior (21).

2. Filter according to claim 1, **characterised in that** the filter element (19) is arranged oblique to the flow direction (29) in the filter housing (18).

3. Filter according to one of claims 1 and 2, **characterised in that** the axis (17) of the filter element (19) lies at least approximately centrally in a cross-sectional surface (27, 27') of the filter element (19).

4. Filter according to one of claims 1 and 2, **characterised in that** the axis (17) of the filter element (19) lies eccentrically in a cross-sectional surface (27, 28) of the filter element (19), wherein the axis (17) of the filter element (19) is offset in respect of a central position in the flow direction (29).

5. Filter according to one of the preceding claims, **characterised in that** a magnetic actuation facility (38) is provided which serves to pivot the filter element (19).

6. Filter according to claim 5, **characterised in that** at least one permanent magnet (37) is arranged on the filter element (19), that the magnetic actuation facility (38) has at least one magnetic element (38) which is assigned to the permanent magnet (37) of the filter element (19) and that the magnetic element (38) is arranged on the filter housing (18).

7. Filter according to claim 5, **characterised in that** the filter element (19) has a ferromagnetic element (37) and/or the filter element (19) is embodied as an at least partially ferromagnetic filter element (19) and that the magnetic actuation facility (38) has at least one first magnetic element (41, 42) and at least one second magnetic element (43, 44), which act to pivot the filter element (19) alternatively on the ferromagnetic element (37) of the filter element (19) or on the filter element (19).

8. Filter according to one of claims 1 to 4, **characterised in that** a thermal or hydraulic actuator or servomotor is provided to actuate the filter element (19).

9. Water-bearing domestic appliance (1), in particular laundry treatment device for washing laundry, having a filter (2) according to one of the preceding claims.

10. Water-bearing domestic appliance as claimed in claim 9, **characterised in that** a measuring facility (15) is provided, which at least indirectly measures a flow resistance of the filter element (19) when the filter element (19) is pivoted about the axis (17).

11. Water-bearing domestic appliance as claimed in claim 10, **characterised in that** the measuring facility (15) is embodied to measure a torque.

12. Water-bearing domestic appliance as claimed in one of claims 10 and 11, **characterised in that** the measuring facility (15) measures the blocking level of the filter element (19) via an operating point of a pump (3), in particular a drain pump, which supplies the filter (2).

## Revendications

1. Filtre (2), notamment pour appareils ménagers à circulation d'eau, comprenant un boîtier de filtre (18) lequel présente une entrée (25), une sortie (26) et un espace intérieur (21) muni d'une section (22) au moins approximativement cylindrique, et comprenant au moins un élément filtrant (19) lequel est disposé dans le boîtier de filtre (18) et dans la section cylindrique (22) de l'espace intérieur 821) et lequel est pivotant autour d'un axe (17) de manière à ce que l'élément filtrant (19), par rapport à un sens d'écoulement (29) allant de l'entrée (25) vers la sortie (26), soit traversable en sens inverse, **caractérisé en ce que** l'élément filtrant (19) présente une surface de section elliptique (27, 27') et **en ce que** la longueur de l'axe secondaire (36) de la surface de section elliptique (27, 27') est au moins approximativement égale au diamètre intérieur (30) de la section cylindrique (22) de l'espace intérieur (21).

2. Filtre selon la revendication 1, **caractérisé en ce que** l'élément filtrant (19) est disposé dans le boîtier de filtre (18,) de manière oblique par rapport au sens d'écoulement (29).

3. Filtre selon l'une quelconque des revendications 1 et 2, **caractérisé en ce que** l'axe (17) de l'élément filtrant (19) est situé au moins approximativement au milieu dans une surface de section (27, 27') de l'élément filtrant (19).

4. Filtre selon l'une quelconque des revendications 1 et 2, **caractérisé en ce que** l'axe (17) de l'élément filtrant (19) est situé de manière excentrée dans une surface de section (27, 27') de l'élément filtrant (19), l'axe (17) de l'élément filtrant (19), par rapport à une position centrale, étant décalé dans le sens d'écoulement (29).

5. Filtre selon l'une quelconque des revendications précédentes, **caractérisé en ce qu'**un dispositif d'actionnement magnétique (38) est ménagé, lequel sert au pivotement de l'élément filtrant (19).

6. Filtre selon la revendication 5, **caractérisé en ce qu'**au moins un aimant permanent (37) est disposé sur l'élément filtrant (19), **en ce que** le dispositif d'actionnement magnétique (38) présente au moins un élément magnétique (38) qui est attribué à l'aimant permanent (37) de l'élément filtrant (19), et **en ce que** l'élément magnétique (38) est disposé sur le boîtier de filtre (18).

7. Filtre selon la revendication 5, **caractérisé en ce que** l'élément filtrant (19) présente un élément ferromagnétique (37) et/ou **en ce que** l'élément filtrant (19) est réalisé comme élément filtrant (19) au moins en partie ferromagnétique et **en ce que** le dispositif d'actionnement magnétique (38) présente au moins un premier élément magnétique (41, 42) et au moins un deuxième élément magnétique (43, 44) qui, pour faire pivoter l'élément filtrant (19), agissent en alternance sur l'élément ferromagnétique (37) de l'élément filtrant (19), respectivement sur l'élément filtrant (19).

8. Filtre selon l'une quelconque des revendications 1 à 4, **caractérisé en ce que** pour la commande de l'élément filtrant (19), un acteur thermique ou hydraulique ou un moteur de commande est ménagé.

9. Appareil ménager (1) à circulation d'eau, notamment appareil de traitement de linge, destiné à laver du linge, comprenant un filtre (2) selon l'une quelconque des revendications précédentes.

10. Appareil ménager à circulation d'eau selon la revendication 9, **caractérisé en ce qu'**un dispositif de mesure (15) est ménagé, lequel mesure au moins indirectement une résistance d'écoulement de l'élément filtrant (19) lors du pivotement de l'élément filtrant (19) autour de l'axe (17).

11. Appareil ménager à circulation d'eau selon la revendication 10, **caractérisé en ce que** le dispositif de mesure (15) est réalisé pour mesurer un moment d'un couple.

12. Appareil ménager à circulation d'eau selon l'une quelconque des revendications 10 et 11, **caractérisé en ce que** le dispositif de mesure (15) mesure le degré de colmatage de l'élément filtrant (19) par l'intermédiaire du point de travail d'une pompe (3), notamment d'une pompe à liquide de lavage qui alimente le filtre (2).
